# FASCICULE DE BREVET EUROPEEN

(11) **EP 3 638 576 B1**
(45) Date de publication et mention de la délivrance du brevet: **15.06.2022**
(21) Numéro de dépôt: 18710538.2
(22) Date de dépôt: 06.03.2018
(51) Int. Cl.: B62M 6/45

(54) **PROCEDE DE COMMANDE DE L'ASSISTANCE POUR VELO A ASSISTANCE ELECTRIQUE**
HILFSSTEUERUNGSVERFAHREN FÜR EIN ELEKTRISCH UNTERSTÜTZTES FAHRRAD
ASSISTANCE CONTROL METHOD FOR ELECTRICALLY ASSISTED BICYCLE

(30) Priorité: 11.06.2017 FR 1770613
(43) Date de publication de la demande: 22.04.2020
(73) Titulaire: Compagnie Générale des Etablissements Michelin, 63000 Clermont-Ferrand (FR)
(72) Inventeur: MODOLO, Ivan, 63040 Clermont-Ferrand Cedex 9 (FR); MATYAS, Istvan, 63040 Clermont-Ferrand Cedex 9 (FR); OLSOMMER, David, 63040 Clermont-Ferrand Cedex 9 (FR)
(74) Mandataire: Boyer, Chris Michel
(86) Numéro de dépôt international: PCT/IB2018/051445
(87) Numéro de publication internationale: WO 2018/229558

(56) Documents cités:
- EP-A1- 2 604 499
- EP-A1- 3 064 423
- US-A1- 2009 102 408
- US-B1- 6 439 067
- US-B1- 6 851 497

## Description

### DOMAINE TECHNIQUE DE L'INVENTION

La présente invention concerne un procédé de commande de l'assistance pour vélo à assistance électrique selon la revendication 1. Elle concerne également un dispositif de commande de l'assistance pour vélo à assistance électrique pour la mise en œuvre du procédé de commande selon la revendication 1.

### ETAT DE LA TECHNIQUE ANTERIEURE

Les vélos à assistance électrique sont de plus en plus répandus. La puissance délivrée par le moteur est couplée à celle fournie par le cycliste par l'entremise du pédalier, réduisant d'autant l'effort du cycliste. De tels vélos permettent par exemple d'effectuer des trajets longs en réduisant l'effort du cycliste, ou encore d'effecteur des trajets avec un important dénivelé.

Les vélos à assistance électrique comprennent en général un moteur électrique, une batterie, et des moyens de pilotage ou de gestion de l'assistance permettant au cycliste d'activer ou désactiver l'assistance et dans certains cas de gérer le niveau d'intensité de l'assistance. Les commandes sont souvent situées au niveau du guidon du vélo, pour un actionnement manuel, avec les doigts.

Par exemple, le document US 2009181826 décrit un système de commande pour commander une bicyclette électrique, qui comprend une bicyclette électrique, une unité de traitement d'informations, un dispositif de surveillance, un dispositif d'entrée et un affichage. La bicyclette électrique et l'unité de traitement de l'information échangent des informations les unes avec les autres. Les informations comprennent les données de la bicyclette électrique, les données de contrôle pour la bicyclette électrique, les éventuels programmes d'exercices. Le dispositif de surveillance surveille l'état corporel d'un cycliste et communique les données surveillées avec l'unité de traitement de l'information. Les données les changements de vitesse, le régime, la vitesse et l'accélération. Le dispositif est en outre utilisé pour gérer la bicyclette électrique de façon à maintenir une fréquence cardiaque du cycliste à une fréquence cardiaque cible.

Le document EP 2801495 décrit un système de commande électromécanique d'un vélo électrique intégrant un dispositif « intelligent » prévu au niveau du guidon. Une interface utilisateur permet de configurer les paramètres de commande de cycle. L'information du cycliste et les informations sur le vélo peuvent être affichées sur le périphérique mobile intelligent.

Le document EP 2979967 décrit un vélo à assistance électrique comprenant: au moins une roue ; un moteur électrique adapté pour entraîner la roue ; un dispositif de commande adapté pour commander le moteur électrique ; et une batterie amovible rechargeable adaptée pour alimenter le moteur électrique. La batterie comporte une unité centrale électronique reliée à une interface de communication adaptée pour communiquer avec un dispositif électronique personnel d'un utilisateur, l'unité centrale électronique de la batterie étant adaptée pour commander le moteur électrique selon plusieurs modes de commande et pour changer de mode de commande en fonction de signaux de réglage reçus du dispositif électronique personnel.

Ces systèmes de commande et de gestion du vélo sont souvent complexes à comprendre et à utiliser et peu intuitifs. En outre, ils captent l'attention du cycliste pendant la conduite. Enfin, ils encombrent l'espace réduit disponible au niveau du guidon.

Le document EP3064423 décrit procédé de commande selon le préambule de la revendication 1 et aussi une interface de commande pour vélo à assistance électrique utilisant le mouvement du pédalier pour commander différents niveaux d'assistance électrique. Des capteurs permettent de déterminer le sens de rotation du pédalier, ainsi que l'intensité du couple appliqué. Le document illustre une série de cas types identifiables, et les codes de commande correspondants. Les cas de gestion prévus, à savoir « low, médium, high », correspondent à divers niveaux d'assistance, selon les besoins de l'utilisateur. Ce document ne décrit aucun mode permettant d'activer/désactiver l'assistance. Au contraire, ce document montre que l'assistance est constamment activée, à des niveaux correspondants aux commandes de l'utilisateur.

Il existe donc un besoin pour un système plus simple, plus intuitif, et moins encombrant. Pour pallier ces différents inconvénients, l'invention prévoit différents moyens techniques.

### EXPOSE DE L'INVENTION

Tout d'abord, un premier objectif de l'invention consiste à prévoir un dispositif de commande simple, fiable et peu encombrant.

Encore un autre objectif de l'invention consiste à prévoir un dispositif et un procédé de commande de l'assistance qui soit intuitif pour l'utilisateur.

Encore un autre objectif de l'invention consiste à prévoir un dispositif avec un temps de réaction ne pénalisant pas l'utilisateur.

Pour ce faire, l'invention prévoit un procédé de commande de l'assistance pour vélo à assistance électrique comprenant les étapes selon lesquelles :
A) si le vélo est en mode non assisté :
   - (i) un pédalier du vélo reçoit une force d'actionnement FA en sens inverse de l'avancement du vélo ;
   - (ii) le pédalier effectue un parcours rotationnel sur une plage angulaire α correspondant à un seuil d'activation ;
   - (iii) un système de détection détecte la rotation en sens inverse du pédalier et l'angle parcouru ;
   - (iv) en cas de franchissement d'un seuil d'activation, le système de détection détecte le franchissement du seuil et un moyen de commande de l'assistance active ladite assistance ;
   - (v) le pédalier reçoit une force d'actionnement dans le sens d'avancement du vélo et l'avancement du vélo est effectué en mode assisté (force du pédalage couplée avec moteur électrique) ;
B) si le vélo est en mode assisté :
   - (i) le pédalier du vélo reçoit une force d'actionnement en sens inverse de l'avancement du vélo ;
   - (ii) le pédalier effectue un parcours rotationnel sur une plage angulaire β correspondant à un seuil de désactivation ;
   - (iii) un système de détection détecte la rotation en sens inverse du pédalier et l'angle parcouru ;
   - (iv) en cas de franchissement d'un seuil de désactivation, le système de détection détecte le franchissement du seuil et un moyen de commande de l'assistance désactive ladite assistance ;
   - (v) le pédalier reçoit une force d'actionnement dans le sens d'avancement du vélo et l'avancement du vélo est effectué en mode non assisté (uniquement la force de l'utilisateur grâce à son action de pédalage).

**Le** procédé est simple à mettre en œuvre pour le cycliste, fiable, et permet de simplifier les commandes au niveau du guidon du vélo.

Selon l'invention le seuil d'activation ou de désactivation de l'assistance correspond à un angle minimal parcouru de 90 degrés, et plus préférentiellement de 180 degrés.

Les seuils permettent d'éviter que l'assistance soit activée ou désactivée sans que le cycliste en ait véritablement l'intention. Une vitesse minimale de rétropédalage, correspondant par exemple à un temps de deux secondes, ou plus préférentiellement une seconde pour franchir le seuil, peut être prévue.

Plusieurs modes d'assistance peuvent être prévus, par exemple en boucle (par exemple « assisté profil a », « assisté profil b », etc, puis mode désactivé). Les parcours angulaires requis pour commander les différents modes d'assistance peuvent être identiques ou distincts des seuils d'activation ou désactivation de l'assistance. Par exemple, on prévoit 180° pour activer/désactiver l'assistance et 360° pour commander un changement de profil d'assistance.

L'invention prévoit également un dispositif de commande de l'assistance pour vélo à assistance électrique tel que préalablement décrit, ledit vélo comprenant un pédalier, des roues, un moteur relié à au moins une des deux roues, un moyen de transmission reliant le pédalier à au moins une des roues, -le dispositif comprenant :
i) un système de détection du sens de rotation du pédalier et d'une plage angulaire α correspondant à un seuil d'activation et d'une plage angulaire β correspondant à un seuil de désactivation ;
ii) un module de commande de l'assistance, relié d'une part au système de détection et d'autre part au moteur afin de commander l'activation et/ou la désactivation de l'assistance.

Ce dispositif permet de déclencher et d'enclencher l'assistance de façon simple et spontanée. Le seuil minimum de rotation permet d'éviter les actions involontaires.

Selon un mode de réalisation avantageux, le système de détection comprend au moins un capteur fixé sur le cadre du vélo et une pluralité d'aimants (ou autres éléments détectables) répartis circonférentiellement sur le pourtour du plateau interne du pédalier. En variante, les éléments en rotation sont disposés sur les axes des pédales, ou sur la chaîne ou sur la courroie.

De manière avantageuse, le dispositif comprend deux capteurs disposés de telle sorte qu'ils peuvent détecter le sens de rotation du pédalier.

Egalement de manière avantageuse, le seuil d'activation ou de désactivation de l'assistance correspond à un angle minimal parcouru de 90 degrés, et plus préférentiellement de 180 degrés.

Les valeurs d'angle d'activation et d'angle de désactivation peuvent être identiques ou distinctes.

De manière avantageuse, le système de détection et le module de commande permettent également de commander l'intensité de l'assistance.

### DESCRIPTION DES FIGURES

Tous les détails de réalisation sont donnés dans la description qui suit, complétée par les figures 1 à 5, présentées uniquement à des fins d'exemples non limitatifs, et dans lesquelles :
- la figure 1 est un organigramme fonctionnel illustrant les principales étapes pour commander l'activation ou la désactivation de l'assistance.
- la figure 2 est une représentation schématique en vue de côté d'un exemple de vélo à assistance électrique ;
- la figure 3 est une représentation schématique d'un exemple de pédalier pourvu d'un dispositif de commande d'assistance ;
- la figure 4 est une représentation schématique d'un premier exemple de réalisation d'un dispositif de commande de l'assistance ;
- la figure 5 est une représentation schématique d'un deuxième exemple de réalisation d'un dispositif de commande de l'assistance ;

### DESCRIPTION DETAILLEE DE L'INVENTION

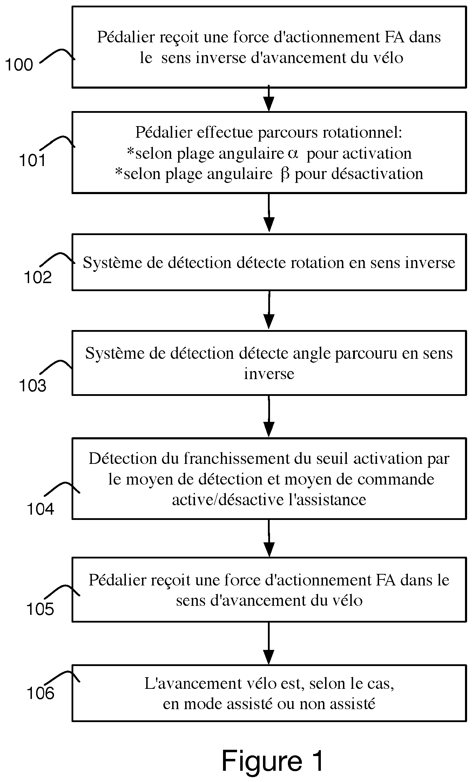

La figure 1 est un organigramme fonctionnel illustrant un exemple de fonctionnement avec les principales étapes permettant la mise en œuvre du procédé de commande de l'assistance électrique du vélo.

Les étapes 100 à 106 illustrent le fonctionnement de l'activation/désactivation électrique. A l'étape 100, le cycliste passe d'un pédalage normal vers l'avant à un pédalage d'activation/désactivation, en sens inversé. Le pédalier reçoit alors une force d'actionnement FA en sens inverse de rotation. A l'étape 101, le pédalier effectue un parcours angulaire α (pour le mode activation) ou β (pour le mode désactivation) et un système de détection 10, décrit plus en détails dans ce qui suit, permet de détecter (étape 102) l'action de rétropédalage ainsi que la plage angulaire parcourue (étape 103).

Une plage minimale de rétropédalage est prévue afin d'éviter les changements de modes involontaires et/ou intempestifs. Cette plage forme un seuil d'activation/désactivation. Par exemple, une plage angulaire minimale de 90°, et plus préférentiellement de 180° est requise afin de pouvoir passer d'un mode à un autre. Selon un premier mode de réalisation, les valeurs des seuils α (pour le mode activation) et β (pour le mode désactivation) sont différentes. En variante, les valeurs de seuils peuvent être identiques.

Si le pédalier effectue le parcours angulaire requis pour franchir un seuil, le système de détection le détecte et un module de commande 13 active/désactive l'assistance électrique du vélo (étape 104).

Pour profiter du mode nouvellement sélectionné, le cycliste passe alors en mode de pédalage normal, vers l'avant (étape 105). L'avancement du vélo est alors effectué selon le mode nouvellement sélectionné, assisté ou non, (étape 106).

Pour changer de mode, le cycliste reprend les étapes du procédé, autant de fois qu'il le souhaite, à son choix.

Le mode de fonctionnement du procédé est simple, et particulièrement intuitif pour le cycliste, qui peut commander toutes les actions liées à la propulsion de son vélo uniquement avec l'action de ses jambes. Les actions au niveau des mains sont ainsi limitées à la conduite et au freinage, comme sur un vélo classique sans assistance électrique.

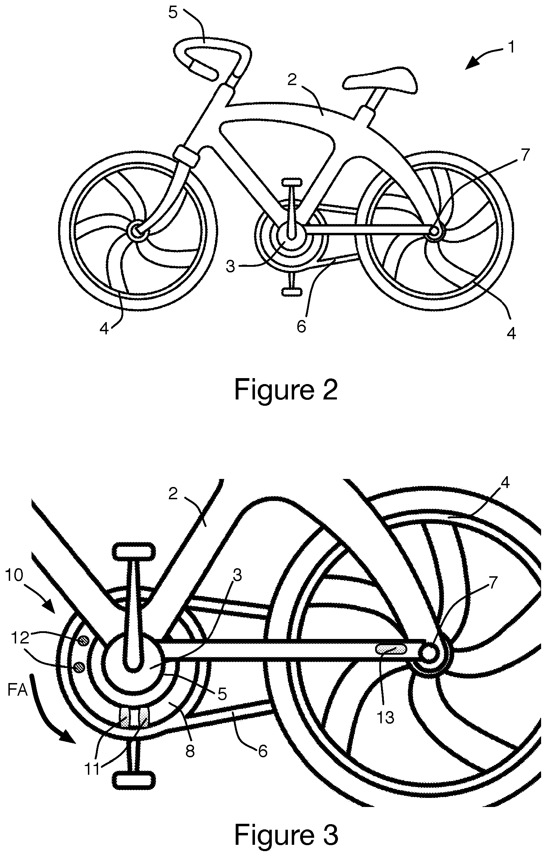

Les figures 2 et 3 illustrent un exemple de vélo muni d'un dispositif de commande de l'assistance électrique. Le vélo 1 comporte de façon classique un cadre 2, un pédalier 3, des roues 4, un guidon 5, et un moyen de transmission 6, reliant le pédalier à la roue motrice, comme par exemple une chaîne, une courroie ou un arbre.

Un moteur 7 électrique complète l'ensemble. Le moteur électrique agit en complément de l'effort fourni par le cycliste par l'entremise du pédalier 3. En mode assisté, le moteur agit en parallèle et permet au cycliste de fournir un effort modéré ou réduit par rapport à un mode sans assistance. Le cycliste peut aussi utiliser un mode non assisté, dans lequel le moteur est désactivé ou découplé de la chaine de transmission.

Pour permettre au cycliste de gérer le passage d'un mode à l'autre, le vélo est pourvu d'un système de détection 10. Ce système peut prendre plusieurs formes, selon les modes de réalisation. Dans les exemples illustrés, le système prévoit un ou plusieurs capteurs 11 montés de façon fixe, par exemple sur le cadre 2, à proximité du plateau interne 8. Des aimants 12 sont répartis circonférentiellement sur le pourtour du plateau interne 8. Un module de commande 13, disposé de préférence à proximité du moteur 7, permet d'agir sur ce dernier pour activer ou désactiver l'assistance électrique.

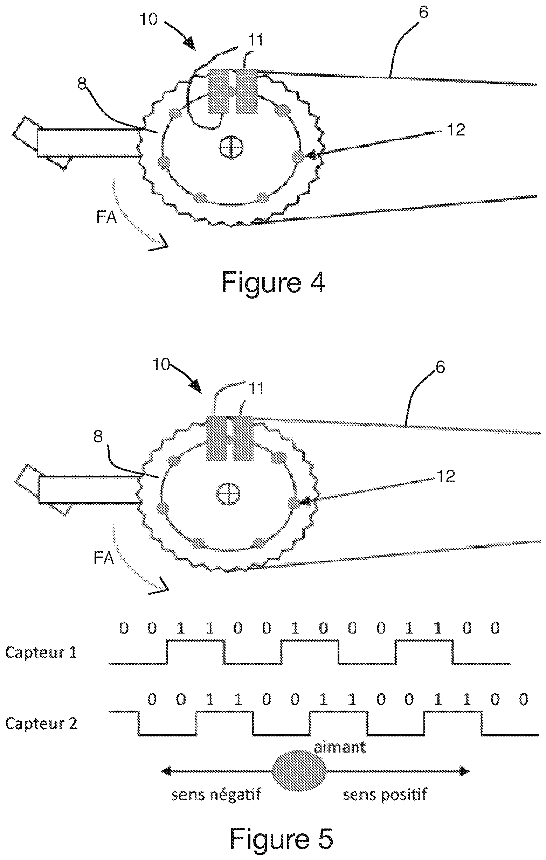

La figure 4 illustre schématiquement un premier exemple de système de détection 10. Le système utilise des capteurs 11 de pédalage couramment utilisés sur les vélos à assistance électrique, avec une microélectronique intégrée dans le capteur. Chaque capteur comporte trois fils, une masse, une alimentation par exemple de 5V et une sortie, par exemple de 0 à 5V. La tension de sortie vaut 0V lorsque le pédalier 3 est à l'arrêt ou lorsqu'il tourne dans le sens positif. La tension de sortie est non nulle, entre 1 et 5V par exemple, lorsque le pédalier 3 tourne dans le sens positif, proportionnellement à la vitesse de pédalage. Le premier capteur 11 est placé dans le sens conventionnel et capte le pédalage dans le sens positif. Le second capteur 12 est tourné de 180° par rapport au premier capteur afin de pouvoir détecter le pédalage dans le sens négatif (rétropédalage).

La figure 5 illustre schématiquement un second mode de réalisation d'un système de détection 10. Un duo de capteurs 11 permet d'assurer la fonction de détection de rétropédalage. Lorsqu'un premier aimant 12 passe à proximité d'un capteur 11, un microcontact interne se ferme dans le capteur (avec par exemple un passage du signal de détection 0 à 1). Selon cette mise en œuvre, lorsque l'aimant 12 passe devant le capteur 11, le signal passe à 1, et lorsque l'aimant 12 n'est plus devant le capteur 11, le signal repasse à 0.

**Tel** qu'illustré sur le schéma des signaux des capteurs de la figure 5, lorsque le signal du second capteur 11 passe à 1 alors que le signal du premier capteur est déjà à 1, le sens de pédalage est positif. Lorsque le signal du second capteur passe à 1 alors que le signal du premier capteur était encore à 0, le sens de pédalage est négatif.

Selon un mode de réalisation avantageux, le système de détection 10 permet également de détecter la plage angulaire parcourue par le pédalier 3. Lorsque cette plage angulaire atteint un seuil minimal prévu, le mode d'assistance est modifié. Ledit seuil d'activation permet d'éviter un changement de mode non souhaité. Une vitesse minimale de rotation en sens inverse peut aussi être requise pour activer/désactiver l'assistance.

En variante, le système de détection 10 permet également d'évaluer la force d'actionnement FA exercée sur les pédales. Plus cette force est importante, plus l'assistance sera élevée. À l'inverse, lorsque la force d'actionnement est faible, le niveau d'assistance est moins élevé. Ce mode de réalisation permet d'obtenir une assistance adaptée à l'effort fourni par le cycliste.

Encore en variante, le dispositif de commande peut également désactiver l'assistance lorsque la vitesse de rotation du pédalier 3 est supérieure à lune valeur définie, pendant un temps supérieur à celui défini.

Grâce au dispositif de commande, le vélo peut fonctionner sans ajout d'interface manuelle sur le guidon, tous les modes étant gérés et commandés directement par l'entremise du pédalier.

### Numéros de référence employés sur les figures

- 1: Vélo à assistance électrique
- 2: Cadre
- 3: Pédalier
- 4: Roues
- 5: Guidon
- 6: Moyen de transmission (par exemple une chaîne, courroie ou arbre)
- 7: Moteur (implanté dans une roue, dans le pédalier ou autre)
- 8: Plateau interne

- 10: Système de détection
- 11: Capteurs
- 12: Aimants
- 13: Module de commande

## Revendications

1. Procédé de commande de l'assistance pour vélo (1) à assistance électrique comprenant les étapes selon lesquelles :
A) si le vélo est en mode non assisté :
- (i) un pédalier (3) du vélo reçoit (100) une force d'actionnement (FA) en sens inverse de l'avancement du vélo ;
- (ii) le pédalier (3) effectue (101) un parcours rotationnel sur une plage angulaire (α) correspondant à un seuil d'activation ;
- (iii) un système de détection (10) détecte (102) la rotation en sens inverse du pédalier (3) et l'angle parcouru (103) ;
- (iv) en cas de franchissement d'un seuil d'activation, le système de détection détecte (104) le franchissement du seuil et un moyen de commande (13) de l'assistance active ladite assistance ;
- (v) le pédalier (3) reçoit une force d'actionnement dans le sens d'avancement du vélo (105) et l'avancement du vélo est effectué en mode assisté (106);
B) si le vélo est en mode assisté :
- (i) le pédalier (3) du vélo reçoit (100) une force d'actionnement en sens inverse de l'avancement du vélo ;
- (ii) le pédalier (3) effectue (101) un parcours rotationnel sur une plage angulaire (β) correspondant à un seuil de désactivation ;
- (iii) un système de détection (10) détecte (102) la rotation en sens inverse du pédalier et l'angle parcouru (103) ;
- (iv) en cas de franchissement d'un seuil de désactivation, le système de détection détecte (104) le franchissement du seuil et un moyen de commande (13) de l'assistance désactive ladite assistance ;
- (v) le pédalier (3) reçoit une force d'actionnement dans le sens d'avancement du vélo (105) et l'avancement du vélo est effectué en mode non assisté (106) ;
**caractérisé en ce que** le seuil d'activation ou de désactivation de l'assistance correspond à un angle minimal parcouru de 90 degrés, et plus préférentiellement de 180 degrés.

2. Procédé de commande de l'assistance pour vélo (1) à assistance électrique selon la revendication 1, dans lequel les valeurs de seuil d'angle d'activation et d'angle de désactivation sont identiques.

3. Procédé de commande de l'assistance pour vélo (1) à assistance électrique selon l'une quelconque des revendications 1 ou 2, dans lequel le système de détection (10) et le module de commande (13) permettent également de commander l'intensité de l'assistance.

4. Dispositif de commande de l'assistance pour vélo (1) à assistance électrique ledit vélo comprenant un pédalier (3), des roues (4), un moteur (7) relié à au moins une des deux roues (4), un moyen de transmission (6) reliant le pédalier (3) à au moins une des roues (4), **caractérisé en ce que** le dispositif comprend :
i) un système de détection (10) du sens de rotation du pédalier (3) et d'une plage angulaire α correspondant à un seuil d'activation et d'une plage angulaire β correspondant à un seuil de désactivation ;
ii) un module de commande (13) de l'assistance, relié d'une part au système de détection (10) et d'autre part au moteur (7) afin de commander l'activation et/ou la désactivation de l'assistance selon le procédé de commande de l'assistance pour vélo de la revendication 1.

5. Dispositif de commande de l'assistance pour vélo (1) à assistance électrique selon la revendication 4, dans lequel le système de détection (10) comprend au moins un capteur (11) fixé sur le cadre (2) du vélo (1) et une pluralité d'aimants (12) répartis circonférentiellement sur le pourtour du plateau interne (8) du pédalier.

6. Dispositif de commande de l'assistance pour vélo (1) à assistance électrique selon la revendication 5, comprenant deux capteurs (12) disposés de telle sorte qu'ils peuvent détecter le sens de rotation du pédalier (3).

7. Dispositif de commande de l'assistance pour vélo (1) à assistance électrique selon l'une des revendications 4 à 6, dans lequel les valeurs d'angle d'activation et d'angle de désactivation sont identiques.

8. Dispositif de commande de l'assistance pour vélo (1) à assistance électrique selon l'une des revendications 4 à 6, dans lequel les valeurs d'angle d'activation et d'angle de désactivation sont distinctes.

9. Dispositif de commande de l'assistance pour vélo (1) à assistance électrique selon l'une des revendications 4 à 8, dans lequel le système de détection (10) et le module de commande (13) permettent également de commander l'intensité de l'assistance.

## Patentansprüche

1. Verfahren zur Steuerung der Unterstützung für ein elektrisch unterstütztes Fahrrad (1), das die Schritte beinhaltet, gemäß denen:
A) wenn sich das Fahrrad in einem Modus ohne Unterstützung befindet:
- (i) eine Tretkurbel (3) des Fahrrads eine Betätigungskraft (FA) in einer zu dem Vorankommen des Fahrrads entgegengesetzten Richtung empfängt (100);
- (ii) die Tretkurbel (3) einen Drehweg über einen Winkelbereich (α) ausführt (101), der einem Aktivierungsschwellenwert entspricht;
- (iii) ein Detektionssystem (10) die Drehung in entgegengesetzter Richtung der Tretkurbel (3) und den durchlaufenen Winkel (103) detektiert (102);
- (iv) im Fall einer Überschreitung eines Aktivierungsschwellenwerts das Detektionssystem die Überschreitung des Schwellenwerts detektiert (104) und ein Mittel zur Steuerung (13) der Unterstützung die Unterstützung aktiviert;
- (v) die Tretkurbel (3) eine Betätigungskraft in der Richtung des Vorankommens des Fahrrads empfängt (105) und das Vorankommen des Fahrrads in einem Modus mit Unterstützung erfolgt (106);
B) wenn sich das Fahrrad in einem Modus mit Unterstützung befindet:
- (i) die Tretkurbel (3) des Fahrrads eine Betätigungskraft in einer zu dem Vorankommen des Fahrrads entgegengesetzten Richtung empfängt (100);
- (ii) die Tretkurbel (3) einen Drehweg über einen Winkelbereich (β) ausführt (101), der einem Deaktivierungsschwellenwert entspricht;
- (iii) ein Detektionssystem (10) die Drehung in entgegengesetzter Richtung der Tretkurbel und den durchlaufenen Winkel (103) detektiert (102);
- (iv) im Fall einer Überschreitung eines Deaktivierungsschwellenwerts das Detektionssystem die Überschreitung des Schwellenwert detektiert (104) und ein Mittel zur Steuerung (13) der Unterstützung die Unterstützung deaktiviert;
- (v) die Tretkurbel (3) eine Betätigungskraft in der Richtung des Vorankommens des Fahrrads empfängt (105) und das Vorankommen des Fahrrads in einem Modus ohne Unterstützung erfolgt (106);
**dadurch gekennzeichnet, dass** der Aktivierungs- oder der Deaktivierungsschwellenwert der Unterstützung einem durchlaufenen Mindestwinkel von 90 Grad und vorzugsweise von 180 Grad entspricht.

2. Verfahren zur Steuerung der Unterstützung für ein elektrisch unterstütztes Fahrrad (1) nach Anspruch 1, wobei die Schwellenwerte des Aktivierungswinkels und des Deaktivierungswinkels identisch sind.

3. Verfahren zur Steuerung der Unterstützung für ein elektrisch unterstütztes Fahrrad (1) nach einem der Ansprüche 1 oder 2, wobei das Detektionssystem (10) und das Steuerungsmodul (13) ferner das Steuern der Stärke der Unterstützung ermöglichen.

4. Vorrichtung zur Steuerung der Unterstützung für ein elektrisch unterstütztes Fahrrad (1), wobei das Fahrrad eine Tretkurbel (3), Räder (4), einen Motor (7), der mit mindestens einem der zwei Räder (4) verbunden ist, ein Übertragungsmittel (6), das die Tretkurbel (3) mit mindestens einem der Räder (4) verbindet, beinhaltet, **dadurch gekennzeichnet, dass** die Vorrichtung Folgendes beinhaltet:
i) ein System zur Detektion (10) der Drehrichtung der Tretkurbel (3) und eines Winkelbereichs a, der einem Aktivierungsschwellenwert entspricht, und eines Winkelbereichs β, der einem Deaktivierungsschwellenwert entspricht;
ii) ein Modul zur Steuerung (13) der Unterstützung, das einerseits mit dem Detektionssystem (10) und andererseits mit dem Motor (7) verbunden ist, um die Aktivierung und/oder Deaktivierung der Unterstützung gemäß dem Verfahren zur Steuerung der Unterstützung für ein Fahrrad nach Anspruch 1 zu steuern.

5. Vorrichtung zur Steuerung der Unterstützung für ein elektrisch unterstütztes Fahrrad (1) nach Anspruch 4, wobei das Detektionssystem (10) mindestens einen Sensor (11), der an dem Rahmen (2) des Fahrrads (1) befestigt ist, und eine Vielzahl von Magneten (12), die über den Umfang der Innenplatte (8) der Tretkurbel umfangsmäßig verteilt sind, beinhaltet.

6. Vorrichtung zur Steuerung der Unterstützung für ein elektrisch unterstütztes Fahrrad (1) nach Anspruch 5, die zwei Sensoren (12) beinhaltet, die so angeordnet sind, dass sie die Drehrichtung der Tretkurbel (3) detektieren können.

7. Vorrichtung zur Steuerung der Unterstützung für ein elektrisch unterstütztes Fahrrad (1) nach einem der Ansprüche 4 bis 6, wobei die Werte des Aktivierungswinkels und des Deaktivierungswinkels identisch sind.

8. Vorrichtung zur Steuerung der Unterstützung für ein elektrisch unterstütztes Fahrrad (1) nach einem der Ansprüche 4 bis 6, wobei die Werte des Aktivierungswinkels und des Deaktivierungswinkels unterschiedlich sind.

9. Vorrichtung zur Steuerung der Unterstützung für ein elektrisch unterstütztes Fahrrad (1) nach einem der Ansprüche 4 bis 8, wobei das Detektionssystem (10) und das Steuerungsmodul (13) ferner das Steuern der Stärke der Unterstützung ermöglichen.

## Claims

1. Assistance control method for an electrically-assisted bicycle (1) comprising the steps according to which:
A) if the bicycle is in unassisted mode:
- (i) a crankset (3) of the bicycle receives (100) an actuation force (FA) in the reverse direction of the direction of advance of the bicycle;
- (ii) the crankset (3) performs (101) a rotational travel over an angular range (α) corresponding to an activation threshold;
- (iii) a detection system (10) detects (102) the reverse rotation of the crankset (3) and the angle travelled (103);
- (iv) in the event of an activation threshold being crossed, the detection system detects (104) the crossing of the threshold and an assistance controlled means (13) activates said assistance;
- (v) the crankset (3) receives an actuation force in the direction of advance of the bicycle (105) and the bicycle proceeds in assisted mode (106);
B) if the bicycle is in assisted mode:
- (i) the crankset (3) of the bicycle receives (100) an actuation force in the reverse direction of the direction of advance of the bicycle;
- (ii) the crankset (3) performs (101) a rotational travel over an angular range (β) corresponding to a deactivation threshold;
- (iii) a detection system (10) detects (102) the reverse rotation of the crankset and the angle travelled (103);
- (iv) in the event of a deactivation threshold being crossed, the detection system detects (104) the crossing of the threshold and an assistance control means (13) deactivates said assistance;
- (v) the crankset (3) receives an actuation force in the direction of advance of the bicycle (105) and the bicycle proceeds in unassisted mode (106),
in which the assistance activation or deactivation threshold corresponds to a minimum angle travelled of 90 degrees, and more preferentially of 180 degrees.

2. Assistance control method for an electrically-assisted bicycle (1) according to claim 1, in which the activation angle and deactivation angle threshold values are identical.

3. Assistance control method for an electrically-assisted bicycle (1) according to any one of the claims 1 or 2, in which the detection system (10) and the control module (13) make it possible to also control the intensity of the assistance.

4. Assistance control device for an electrically-assisted bicycle (1), said bicycle comprising a crankset (3), wheels (4), a motor (7) linked to at least one of the two wheels (4), a transmission means (6) linking the crankset (3) to at least one of the wheels (4),
**characterized in that** the device comprises:
i) a detection system (10) for detecting the direction of rotation of the crankset (3) and an angular range α corresponding to an activation threshold and an angular range β corresponding to a deactivation threshold;
ii) an assistance control module (13) linked on the one hand to the detection system (10) and on the other hand to the motor (7) in order to control the activation and/or the deactivation of the assistance according to the assistance control method for bicycle of the claim 1.

5. Assistance control device for an electrically-assisted bicycle (1) according to Claim 4, in which the detection system (10) comprises at least one sensor (11) fixed onto the frame (2) of the bicycle (1) and a plurality of magnets (12) distributed circumferentially on the perimeter of the internal chainring (8) of the crankset.

6. Assistance control device for an electrically-assisted bicycle (1) according to Claim 5, comprising two sensors (12) disposed in such a way that they can detect the direction of rotation of the crankset (3).

7. Assistance control device for an electrically-assisted bicycle (1) according to one of Claims 4 to 6, in which the activation angle and deactivation angle values are identical.

8. Assistance control device for an electrically-assisted bicycle (1) according to one of Claims 4 to 6, in which the activation angle and deactivation angle values are distinct.

9. Assistance control device for an electrically-assisted bicycle (1) according to one of Claims 4 to 8, in which the detection system (10) and the control module (13) make it possible to also control the intensity of the assistance.
